# EUROPEAN PATENT SPECIFICATION

(11) **EP 4 452 446 B1**
(45) Date of publication and mention of the grant of the patent: **08.04.2026**
(21) Application number: 22846925.0
(22) Date of filing: 12.12.2022
(51) Int. Cl.: B01D 29/64

(54) **SCREEN FILTER SUCTION NOZZLE**
SIEBFILTERSAUGDÜSE
BUSE D'ASPIRATION POUR FILTRE À TAMIS

(30) Priority: 23.12.2021 US 202163293093 P
(43) Date of publication of application: 30.10.2024
(73) Proprietor: Netafim Ltd., 67892 Tel Aviv (IL)
(72) Inventor: GILBOA, Amit, 3780400 Kibutz Sdot Yam (IL)
(74) Representative: Vossius & Partner Patentanwälte Rechtsanwälte mbB
(86) International application number: PCT/IB2022/062094
(87) International publication number: WO 2023/119055

(56) References cited:
- EP-A1- 3 000 517
- JP-A- H10 137 516
- US-A- 3 635 348
- US-A1- 2011 303 591

## Description

### TECHNICAL FIELD

Embodiments of the invention relate to a screen filter suction nozzle, and in particular to an orifice that is used for regulating the flow of liquid into the suction nozzle.

### BACKGROUND

An irrigation screen filter is a type of water filtration device that uses a screen to separate dirt out of water that is used for irrigation. Screen filters typically require periodic cleaning to maintain their filtering efficiency, and a common cleaning method is to apply suction to the screen via suction nozzles.

The suction nozzles are used for evacuating debris and dirt from the screen surface by suction action, and the suction force is proportional to the suction speed. Therefore, for a given suction flow rate, the smaller the orifice of the suction nozzle, the higher the suction speed and hence the suction force and cleaning efficiency.

Other criteria that determine the functionality of the suction nozzle is the maximal dirt size particle that can pass into the nozzle and hence be evacuated from the screen surface. This size is determined by the smallest passage in the nozzle (usually at the orifice of the suction nozzle).

Effective suction width is yet another criterion that determines the functionality of the suction nozzle. Since the array of nozzles being used for cleaning do not cover the full screen surface, active scanning should be performed across the screen surface.

Such scanning of the screen is performed by movement of the nozzle across the screen, in such a way that its path of movement covers the full screen surface. Nozzle movement interval is defined by the nozzle effective scan width. The wider the nozzle is - the fewer scanning steps are required in order to cover the full screen surface.

As a result, a conflict may arise between the above-mentioned criteria. While the ability to evacuate large debris requires large passage nozzle openings and the ability to scan the screen surface effectively requires wide nozzles- the ability to maintain high suction speed requires small nozzles.

Examples for self-cleaning filters comprising suction nozzles are disclosed in EP3000517, JPH10137516 and US2011/303591.

### SUMMARY

The following embodiments and aspects thereof are described and illustrated in conjunction with systems, tools and methods which are meant to be exemplary and illustrative, not limiting in scope.

In an embodiment there is provided a suction nozzle for a screen filter comprising an inlet orifice at its distal side through which liquid is arranged to flow into the nozzle during a cleaning operation, the orifice having a longitudinal extension, wherein a width of the orifice changes along its longitudinal extension.

Possibly, changes along the longitudinal extension of an orifice are step like changes.

Possibly, changes along the longitudinal extension of an orifice are gradual changes.

The orifice may be designed to comprise primary and secondary sections where the width of the orifice is, respectively, wider and narrower.

In some cases, all primary sections may have a substantially similar width and/or all secondary sections may have a substantially similar width, where, for example, up to about 5% or about 10% difference in width may be determined in some cases as being substantially similar.

In certain cases, the orifice is arranged along its longitudinal extension in a symmetric manner placing e.g., two secondary sections on opposing sides of a central primary section - or two primary sections on opposing sides of a central secondary section.

In addition to the exemplary aspects and embodiments described above, further aspects and embodiments will become apparent by reference to the figures and by study of the following detailed descriptions.

### BRIEF DESCRIPTION OF THE FIGURES

Exemplary embodiments are illustrated in referenced figures. It is intended that the embodiments and figures disclosed herein are to be considered illustrative, rather than restrictive. The invention, however, both as to organization and method of operation, together with objects, features, and advantages thereof, may best be understood by reference to the following detailed description when read with the accompanying figures, in which:
**Fig. 1** schematically shows a perspective view of a screen filter in accordance with the present invention;
**Fig. 2** schematically shows a partial cross-sectional view of the screen filter of Fig. 1; and
**Fig. 3** schematically shows various cross-sectional shapes of suction nozzle orifices in accordance with the various embodiments of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated within the figures to indicate like elements.

### DETAILED DESCRIPTION

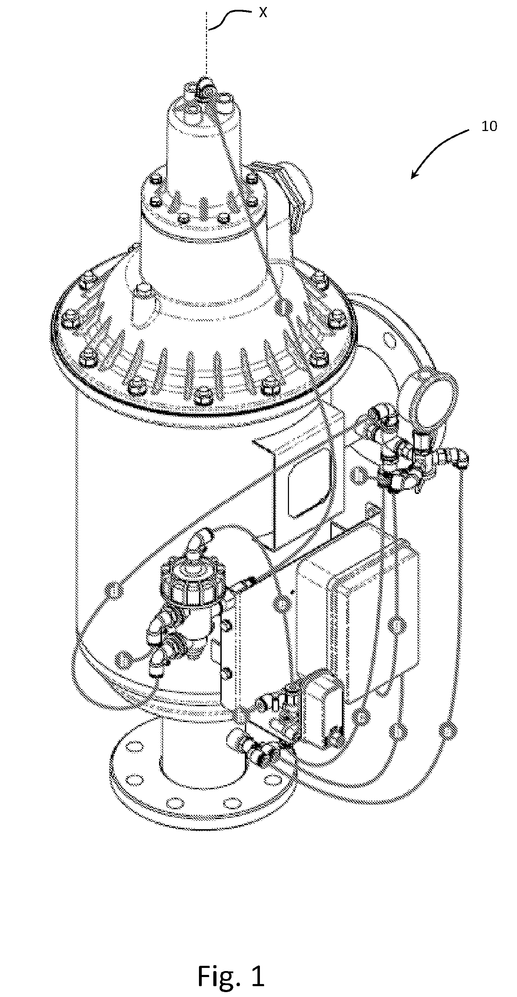

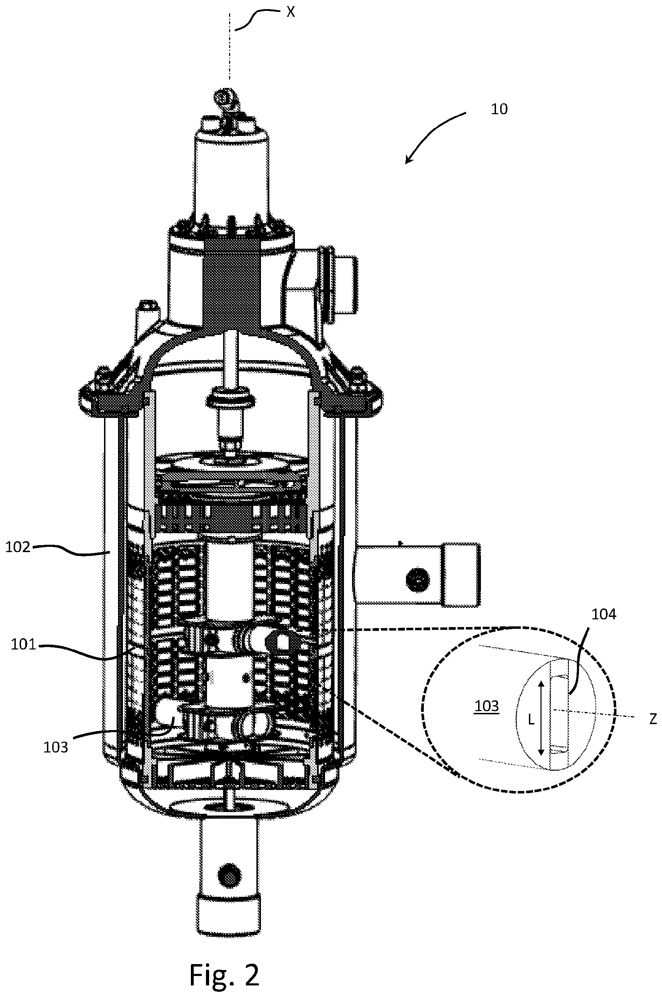

Attention is first drawn to Fig. 1 showing a screen filter 10 in accordance with an embodiment of the present invention that is generally formed about an axis X. Hydraulic lines indicated 'a' to 'h' provide liquid pressurized communication needed for controlling and operating the filter. Such control and operation of the filter includes activation of a reciprocating cleaning operation along axis X of a screen of the filter (seen in Fig. 2) that is formed about axis X.

Attention is drawn to Fig. 2 showing a cross sectional view of the filter taken along a plane that is parallel to axis X. A screen 101 of the filter that is formed about axis X defines relative inner and outer regions that are formed within an exterior housing 102 of the filter. The outer region is formed between screen 101 and exterior housing 102 of the filter. The inner region is formed at an inner side of the screen.

In a filtering operation of the filter, liquid flows from the inner region towards the outer region via the screen where dirt is removed from the liquid remaining on the inner side of the screen.

During a cleaning operation of the filter, a cleaning assembly of the filter is activated to urge suction nozzles 103 to move in a reciprocating manner back and forth along axis X while rotating about same axis X. This motion urges formation of helical cleaning paths that are created by each suction nozzle 103 along the inner side of the screen.

Each suction nozzle 103 extends in a radial outer direction towards the screen along a respective axis Z. In the enlarged section at the right-hand side of Fig. 2, a radial outer side of a suction nozzle is seen including an orifice 104 through which the suction nozzle opens out towards the screen. Each orifice has a longitudinal extension L that extends generally parallel to axis X of the filter.

During a cleaning operation, liquid flows into each suction nozzle via its respective orifice, which is located adjacent the inner side of the screen in order to suck and thus clean the screen from dirt that accumulated on it during the preceding filtering phase of the filter.

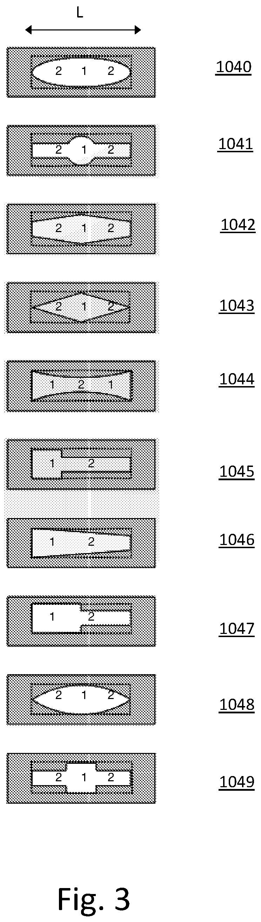

The orifice seen in Fig. 2 is of a known type where a width of the orifice along its longitudinal extension L is generally identical. With attention drawn to Fig. 3, various orifice types used in suction nozzle embodiments of the present invention are shown. Each one of the orifice types is shown enclosed within a 'dotted' rectangle resembling the known type seen in Fig. 2.

Each one of the orifice embodiments of Fig. 2 can be seen comprising primary sections 1 along their longitudinal extensions where they are wider and secondary sections 2 where they are narrower.

The primary sections 1 are suited for sucking dirt particles of larger size, while the secondary sections 2 are configured for higher suction speeds and hence suction force that is suited for higher cleaning efficiency.

Orifices 1040, 1041, 1042, 1043, 1048 and 1049 can be seen being symmetrically formed to include two secondary sections 2 symmetrically formed on opposing sides of a central primary section 1.

Orifices 1045, 1046 and 1047 can be seen being formed in a non symmetric manner to include primary 1 and secondary 2 sections one aside the other.

In the description and claims of the present application, each of the verbs, "comprise" "include" and "have", and conjugates thereof, are used to indicate that the object or objects of the verb are not necessarily a complete listing of members, components, elements or parts of the subject or subjects of the verb.

Further more, while the present application or technology has been illustrated and described in detail in the drawings and foregoing description, such illustration and description are to be considered illustrative or exemplary and non-restrictive; the technology is thus not limited to the disclosed embodiments. Variations to the disclosed embodiments can be understood and effected by those skilled in the art and practicing the claimed technology, from a study of the drawings, the technology, and the appended claims.

In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures can not be used to advantage.

The present technology is also understood to encompass the exact terms, features, numerical values or ranges etc., if in here such terms, features, numerical values or ranges etc. are referred to in connection with terms such as "about, ca., substantially, generally, at least" etc. In other words, "about 3" shall also comprise "3" or "substantially perpendicular" shall also comprise "perpendicular". Any reference signs in the claims should not be considered as limiting the scope.

Although the present embodiments have been described to a certain degree of particularity, it should be understood that various alterations and modifications could be made without departing from the scope of the invention as hereinafter claimed.

## Claims

1. A screen filter (10) comprising a screen (101) for removing dirt from liquid flowing therethrough, the screen (101) being formed about an axis X of the filter (10) and the screen filter (10) comprising a cleaning assembly for periodically cleaning the screen (101),
the cleaning assembly comprising suction nozzles (103) arranged for reciprocating movement back and forth along axis X while rotating about same axis X, and
each suction nozzle (103) has a longitudinal outline that extends continuously radially outward along and alongside a respective axis Z towards the screen and comprises an elongated orifice (104) at its radial outer side through which the suction nozzle (103) opens out towards the screen (101),
wherein the orifice (104) having:
a longitudinal extension L that is bound by the longitudinal outline of the nozzle (103) and extends generally parallel to axis X of the filter (10), and
a width that changes along its longitudinal extension L.

2. The screen filter of claim 1, wherein each orifice (104) comprising primary and secondary sections where the width of the orifice (104) is, respectively, wider and narrower.

3. The screen filter of claim 2, wherein the orifice (104) comprises along its longitudinal extension L the following sections in consecutive order: secondary, primary secondary.

4. The screen filter of claim 2, wherein the orifice (104) comprises along its longitudinal extension the following sections in consecutive order: primary, secondary, primary.

5. The screen filter of claim 2, wherein the orifice (104) comprises along its longitudinal extension the following sections in consecutive order: primary, secondary.

6. The screen filter of any one of claims 1 to 5, wherein all primary sections in an orifice define a substantially similar width and all secondary sections in an orifice define a substantially similar width.

7. A method for periodically cleaning a screen filter comprising the steps of:
providing a screen filter (10) comprising a screen (101) for removing dirt from liquid flowing therethrough, the screen (101) being formed about an axis X of the filter and the screen filter (101) comprising a cleaning assembly comprising suction nozzles (103) wherein each suction nozzle (103) has a longitudinal outline that extends continuously radially outward along and alongside a respective axis Z towards the screen and comprises an elongated orifice (104) at its radial outer side through which the suction nozzle (103) opens out towards the screen (101), wherein the orifice (104) having a longitudinal extension L that is bound by the longitudinal outline of the nozzle (103) and extends generally parallel to axis X of the filter (10), and a width that changes along its longitudinal extension L; and
urging periodic cleaning of the screen (101) by urging the cleaning assembly to move back and forth along axis X while rotating the about same axis X.

8. The method of claim 7, wherein each orifice (104) comprising primary and secondary sections where the width of the orifice (104) is, respectively, wider and narrower.

9. The method of claim 8, wherein the orifice (104) comprises along its longitudinal extension L the following sections in consecutive order: secondary, primary secondary.

10. The method of claim 8, wherein the orifice (104) comprises along its longitudinal extension the following sections in consecutive order: primary, secondary, primary.

11. The method of claim 8, wherein the orifice (104) comprises along its longitudinal extension the following sections in consecutive order: primary, secondary.

12. The method of any one of claims 8 to 11, wherein all primary sections in an orifice define a substantially similar width and all secondary sections in an orifice define a substantially similar width.

## Patentansprüche

1. Siebfilter (10), das ein Sieb (101) zum Entfernen von Schmutz aus einer hindurchfließenden Flüssigkeit aufweist, wobei das Sieb (101) um eine Achse X des Filters (10) ausgebildet ist und das Siebfilter (10) eine Reinigungsanordnung zum periodischen Reinigen des Siebes (101) aufweist,
wobei die Reinigungsanordnung Saugdüsen (103) aufweist, die für eine Hin- und Herbewegung vorwärts und rückwärts entlang der Achse X angeordnet sind, während sie sich um dieselbe Achse X drehen, und
jede Saugdüse (103) einen longitudinalen Umriss hat, der sich kontinuierlich radial nach außen entlang und längsseits einer jeweiligen Achse Z zum Sieb erstreckt und eine längliche Öffnung (104) an seiner radialen Außenseite aufweist, durch die die Saugdüse (103) sich zum Sieb (101) öffnet,
wobei die Öffnung (104) aufweist:
eine longitudinale Ausdehnung L, die durch den longitudinalen Umriss der Düse (103) begrenzt ist und sich im Allgemeinen parallel zur Achse X des Filters (10) erstreckt, und
eine Breite, die sich entlang ihrer longitudinalen Ausdehnung L ändert.

2. Siebfilter nach Anspruch 1, wobei jede Öffnung (104) einen primären und einen sekundären Abschnitt aufweist, in dem die Breite der Öffnung (104) breiter bzw. schmaler ist.

3. Siebfilter nach Anspruch 2, wobei die Öffnung (104) entlang ihrer longitudinalen Ausdehnung L die folgenden Abschnitte in aufeinanderfolgender Reihenfolge aufweist: sekundär, primär, sekundär.

4. Siebfilter nach Anspruch 2, wobei die Öffnung (104) entlang ihrer longitudinalen Ausdehnung die folgenden Abschnitte in aufeinanderfolgender Reihenfolge aufweist: primär, sekundär, primär.

5. Siebfilter nach Anspruch 2, wobei die Öffnung (104) entlang ihrer longitudinalen Ausdehnung die folgenden Abschnitte in aufeinanderfolgender Reihenfolge aufweist: primär, sekundär.

6. Siebfilter nach einem der Ansprüche 1 bis 5, wobei alle primären Abschnitte in einer Öffnung eine im Wesentlichen ähnliche Breite definieren und alle sekundären Abschnitte in einer Öffnung eine im Wesentlichen ähnliche Breite definieren.

7. Verfahren zum periodischen Reinigen eines Siebfilters, das die Schritte aufweist:
Bereitstellen eines Siebfilters (10), das ein Sieb (101) zum Entfernen von Schmutz aus einer hindurchfließenden Flüssigkeit aufweist, wobei das Sieb (101) um eine Achse X des Filters ausgebildet ist und das Siebfilter (101) eine Reinigungsanordnung aufweist, die Saugdüsen (103) aufweist, wobei jede Saugdüse (103) einen longitudinalen Umriss aufweist, der sich kontinuierlich radial nach außen entlang und längsseitig einer jeweiligen Achse Z zum Sieb erstreckt und eine längliche Öffnung (104) an seiner radialen Außenseite aufweist, durch die sich die Saugdüse (103) zum Sieb (101) öffnet, wobei die Öffnung (104) eine longitudinalen Ausdehnung L, die durch den longitudinalen Umriss der Düse (103) begrenzt ist und sich im Allgemeinen parallel zur Achse X des Filters (10) erstreckt, und eine Breite aufweist, die sich entlang ihrer longitudinalen Ausdehnung L ändert; und
Antreiben einer periodischen Reinigung des Siebes (101) durch Antreiben der Reinigungsanordnung, sich entlang der Achse X vorwärts und rückwärts zu bewegen, während sie sich gleichzeitig um dieselbe Achse X dreht.

8. Verfahren nach Anspruch 7, wobei jede Öffnung (104) einen primären und einen sekundären Abschnitt aufweist, in dem die Breite der Öffnung (104) breiter bzw. schmaler ist.

9. Verfahren nach Anspruch 8, wobei die Öffnung (104) entlang ihrer longitudinalen Ausdehnung L die folgenden Abschnitte in aufeinanderfolgender Reihenfolge aufweist: sekundär, primär, sekundär.

10. Verfahren nach Anspruch 8, wobei die Öffnung (104) entlang ihrer longitudinalen Ausdehnung die folgenden Abschnitte in aufeinanderfolgender Reihenfolge aufweist: primär, sekundär, primär.

11. Verfahren nach Anspruch 8, wobei die Öffnung (104) entlang ihrer longitudinalen Ausdehnung die folgenden Abschnitte in aufeinanderfolgender Reihenfolge aufweist: primär, sekundär.

12. Verfahren nach einem der Ansprüche 8 bis 11, wobei alle primären Abschnitte in einer Öffnung eine im Wesentlichen ähnliche Breite definieren und alle sekundären Abschnitte in einer Öffnung eine im Wesentlichen ähnliche Breite definieren.

## Revendications

1. Filtre à tamis (10) comprenant un tamis (101) pour éliminer de la saleté à partir d'un liquide qui s'écoule à travers celui-ci, le tamis (101) étant formé autour d'un axe X du filtre (10) et le filtre à tamis (10) comprenant un ensemble de nettoyage pour nettoyer périodiquement le tamis (101),
l'ensemble de nettoyage comprenant des buses d'aspiration (103) agencées pour effectuer un déplacement en va-et-vient le long de l'axe X tout en tournant autour du même axe X, et
chaque buse d'aspiration (103) présente un contour longitudinal qui s'étend de manière continue radialement vers l'extérieur le long et à côté d'un axe respectif Z vers le tamis, et comprend un orifice allongé (104) au niveau de son côté extérieur radial à travers lequel la buse d'aspiration (103) s'ouvre vers le tamis (101),
dans lequel l'orifice (104) présente :
une extension longitudinale L qui est délimitée par le contour longitudinal de la buse (103) et s'étend généralement parallèlement à l'axe X du filtre (10), et
une largeur qui change le long de son extension longitudinale L.

2. Filtre à tamis selon la revendication 1, dans lequel chaque orifice (104) comprend des sections primaire et secondaire où la largeur de l'orifice (104) est respectivement plus large et plus étroite.

3. Filtre à tamis selon la revendication 2, dans lequel l'orifice (104) comprend, le long de son extension longitudinale L, les sections suivantes dans un ordre consécutif : secondaire, primaire, secondaire.

4. Filtre à tamis selon la revendication 2, dans lequel l'orifice (104) comprend le long de son extension longitudinale les sections suivantes dans un ordre consécutif : primaire, secondaire, primaire.

5. Filtre à tamis selon la revendication 2, dans lequel l'orifice (104) comprend le long de son extension longitudinale les sections suivantes dans un ordre consécutif : primaire, secondaire.

6. Filtre à tamis selon l'une quelconque des revendications 1 à 5, dans lequel toutes les sections primaires dans un orifice définissent une largeur sensiblement similaire et toutes les sections secondaires dans un orifice définissent une largeur sensiblement similaire.

7. Procédé de nettoyage périodique d'un filtre à tamis, comprenant les étapes consistant à :
fournir un filtre à tamis (10) comprenant un tamis (101) pour éliminer de la saleté à partir d'un liquide s'écoulant à travers celui-ci, le tamis (101) étant formé autour d'un axe X du filtre et le filtre à tamis (101) comprenant un ensemble de nettoyage comprenant des buses d'aspiration allongées (103), dans lequel chaque buse d'aspiration (103) présente un contour longitudinal qui s'étend de manière continue radialement vers l'extérieur le long et à côté d'un axe respectif Z vers le tamis, et comprend un orifice allongé (104) au niveau de son côté extérieur radial à travers lequel la buse d'aspiration (103) s'ouvre vers le tamis (101), dans lequel l'orifice (104) présente une extension longitudinale L qui est délimitée par le contour longitudinal de la buse (103) et s'étend généralement parallèlement à l'axe X du filtre (10), et une largeur qui change le long de son extension longitudinale L ; et
pousser à un nettoyage périodique du tamis (101) en demandant à l'ensemble de nettoyage de se déplacer en va-et-vient le long de l'axe X tout en tournant autour du même axe X.

8. Procédé selon la revendication 7, dans lequel chaque orifice (104) comprend des sections primaire et secondaire où la largeur de l'orifice (104) est respectivement plus large et plus étroite.

9. Procédé selon la revendication 8, dans lequel l'orifice (104) comprend, le long de son extension longitudinale L, les sections suivantes dans l'ordre consécutif : secondaire, secondaire, primaire.

10. Procédé selon la revendication 8, dans lequel l'orifice (104) comprend, le long de son extension longitudinale, les sections suivantes dans l'ordre consécutif : primaire, secondaire, primaire.

11. Procédé selon la revendication 8, dans lequel l'orifice (104) comprend, le long de son extension longitudinale, les sections suivantes dans l'ordre consécutif : primaire, secondaire.

12. Procédé selon l'une quelconque des revendications 8 à 11, dans lequel toutes les sections primaires dans un orifice définissent une largeur sensiblement similaire et toutes les sections secondaires dans un orifice définissent une largeur sensiblement similaire.
